# EUROPEAN PATENT SPECIFICATION

(11) **EP 0 883 459 B1**
(45) Date of publication and mention of the grant of the patent: **17.09.2003**
(21) Application number: 97908957.0
(22) Date of filing: 28.02.1997
(51) Int. Cl.: B23D 51/10, G05G 1/10

(54) **KEYLESS BLADE CLAMP MECHANISM**
SCHLÜSSELLOSE SÄGEBLATTEINSPANNVORRICHTUNG
MECANISME DE BLOCAGE DE LAME SANS CLAVETTE

(30) Priority: 01.03.1996 US 12598 P; 10.07.1996 US 21470 P
(43) Date of publication of application: 16.12.1998
(73) Proprietor: MILWAUKEE ELECTRIC TOOL CORPORATION, Brookfield Wisconsin 53005 (US)
(72) Inventor: KRAMER, Scott, G., Milwaukee, WI 53215 (US); BEDNAR, Thomas, R., Pewaukee, WI 53072 (US); JUNGMANN, Richard, H., Richfield, WI 53076 (US); SONNENTAG, Jeffary, R., Franklin, WI 53132 (US)
(74) Representative: Holmes, Matthew Peter
(86) International application number: US9703633
(87) International publication number: WO97031745

(56) References cited:
- EP-A- 0 544 129
- EP-A- 0 623 413
- DE-A- 3 713 208
- US-A- 3 750 283
- US-A- 5 443 276

## Description

The present invention relates to reciprocating saws and more specifically to a keyless blade clamp for quickly and easily replacing and securing a saw blade to a spindle of a reciprocating saw.

Hand held reciprocating tools, such as electric reciprocating saws, include removable blades, which permits the use of different cutting edges as may be necessary for cutting different materials and for the replacement of worn or damaged blades. This requires a blade mounting system that allows rapid blade replacement while accurately and firmly coupling the blade to the tool. Typically, blade mounting systems require a tool, such as an allen wrench or a special key, in order to replace and secure the blade. This is a slow and often difficult process.

Recently, blade clamps have been developed that do not require a tool. These clamps are commonly called keyless blade clamps. While many existing keyless blade clamps are a vast improvement over standard blade clamps that require tools, there is still a need for keyless blade clamps that are easy to manufacture, simple to use, and long-lasting.

A simple power source with keyless blade clamps having the features of the pre-characterising portion of claim 1 are disclosed in EP 0 623 413 and EP 0 544 129.

According to the present invention there is provided a reciprocating saw comprising:
a reciprocatable spindle having an end adapted to receive a saw blade;
a blade clamp mechanism connected to said spindle and adapted to attach the saw blade to said spindle, said blade clamp mechanism including;
an actuating member mounted on said end of said spindle and capable of rotating relative to said spindle between an engaged position and a released position;
a locking member operatively associated with said actuating member and moveable relative to said spindle such that when said actuating member is in the engaged position said locking member can engage the saw blade and when said actuating member is in the released position said locking member will allow the saw blade to be released from said clamp mechanism;
a biasing member interconnected with said actuating member for biasing said actuating member toward the engaged position; and
a housing mounted to said actuating member.

Preferably, the housing comprises a substantially thermally insulative material (e.g. a plastic or polymeric material). The housing can further include a plurality of arcuate recesses on an exterior surface of the housing. By virtue of the provision of a housing mounted to the actuating member, heat transfer from the blade to the user is reduced. In addition, the arcuate recesses facilitate engagement of the housing by the user.
Figure 1 is a perspective assembly view of a keyless blade clamp mechanism .
Figure 2 is a side view of the blade clamp of Figure 1 in an assembled condition and clamping a saw blade.
Figure 3 is a front view of the blade clamp of Figure 2.
Figure 4 is a section view taken along line 4-4 in Figure 3.
Figure 5 is a section view taken along line 5-5 in Figure 2.
Figure 6 is a section view taken along line 6-6 of Figure 2 and showing the blade clamp in an engaged position.
Figure 7 is the section view of Figure 6 showing the blade clamp in a disengaged position.
Fig. 8 is a side view of a pin used with the keyless blade clamp of Fig. 1.
Fig. 9 is a front perspective view of a cam collar used with the keyless blade clamp of Fig. 1.
Fig. 10 is a rear perspective view of the cam collar of Fig. 9.
Fig. 11 is a side view of a spring cover used with the blade clamp of Fig. 1.
Fig. 12 is an end view of the spring cover of Fig. 11.
Fig. 13 is a rear perspective view of a collar housing used with the blade clamp of Fig. 1.
Fig. 14 is a side view of the collar housing of Fig. 13.
Fig. 15 is a section view taken along line 15-15 in Fig. 14.
Fig. 16 is a side view in partial cross-section of a reciprocating saw .

### DETAILED DESCRIPTION OF THE ILLUSTRATED EMBODIMENT

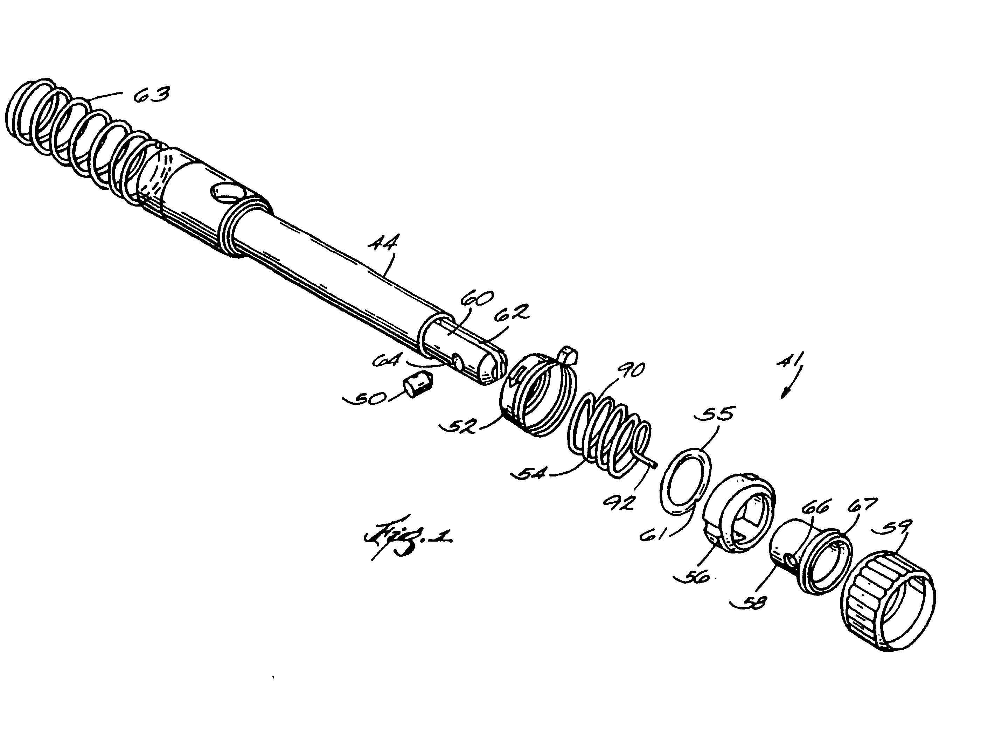

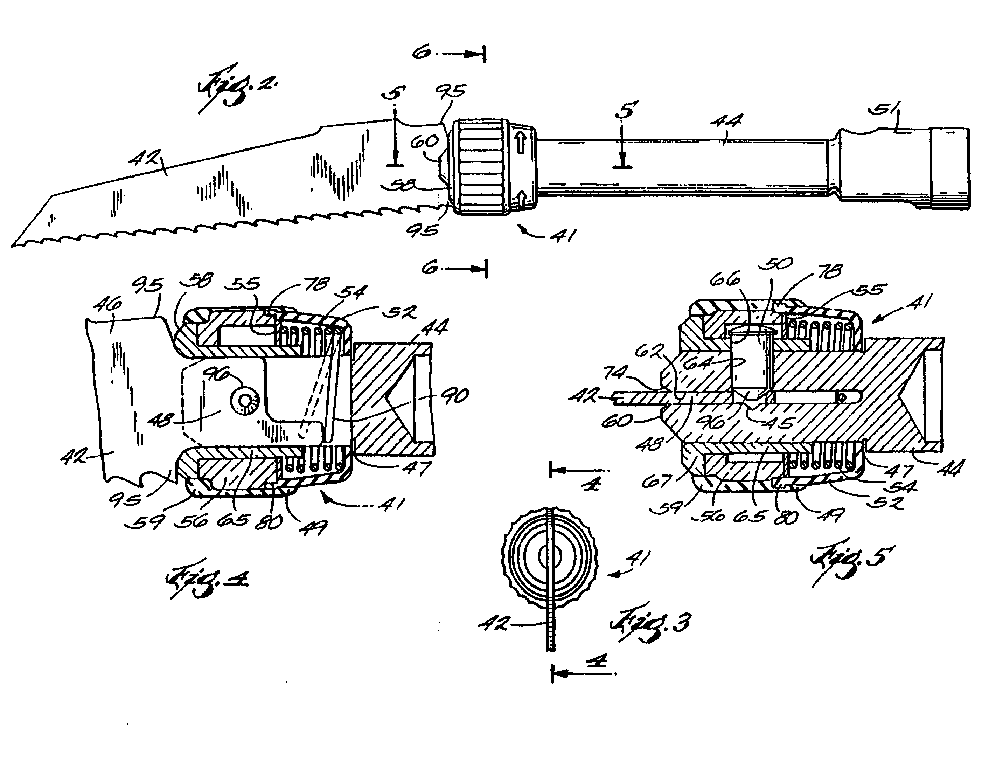

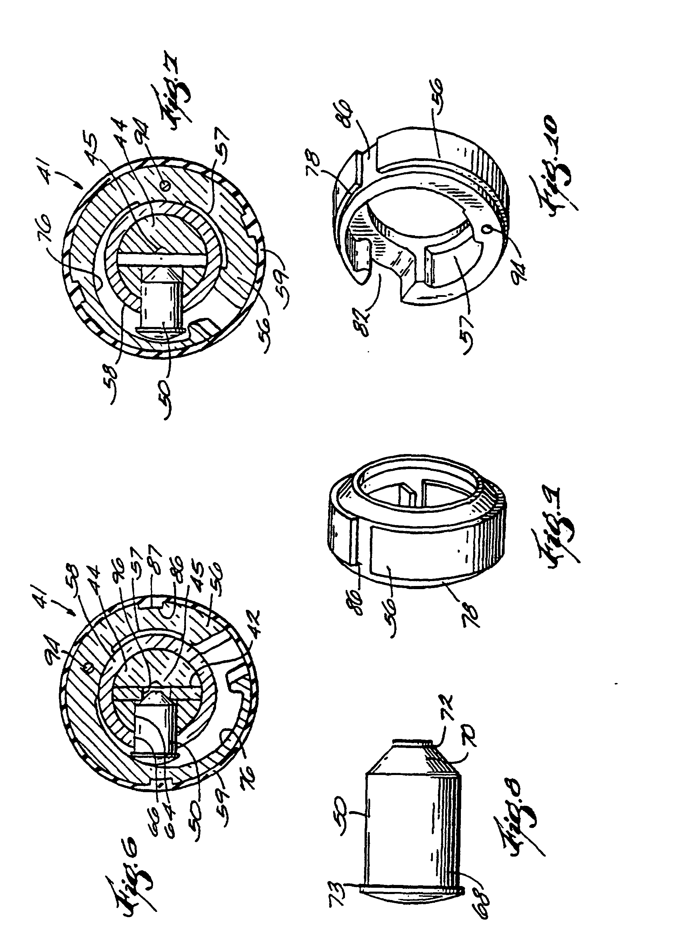

Figs. 1 through 7 illustrate a keyless blade clamp 41 according to an embodiment of the present invention. The illustrated blade clamp 41 is shown mounted on a reciprocatable spindle 44, and in Figs. 2-6 is shown engaging a saw blade 42 having a main portion 46 and a tang 48. Briefly, the blade clamp 41 includes a pin 50, a spring cover 52, a spring 54, a washer 55, a cam collar 56, a sleeve 58 and a collar housing 59.

The spindle 44 is adapted to be mounted for reciprocation within the body of a reciprocating saw 99 (Fig. 16). A drive portion 51 (Fig. 2) is adapted to be driven by a wobble plate (not shown), as is generally known in the art. The spindle 44 includes a spindle tip 60 having a slot 62 dimensional to receive the saw blade 42, and a tip orifice 64 extending laterally from an outer surface of the spindle tip 60 to the slot 62 (Figs. 1 and 5). A compression spring 63 (Fig. 1) is provided to bias the spindle 44 toward an extended position relative to the body of the reciprocating saw.

The sleeve 58 is positioned around the spindle tip 60, and includes a cylindrical body portion 65 and a flange 67. The inner diameter of the body portion 65 is dimensioned to receive the spindle tip 60. The body portion 65 includes a sleeve orifice 66 that is aligned with the spindle orifice 64.

The pin 50 (Figs. 1 and 4-8) is slidably positioned within the sleeve orifice 66 and the tip orifice 64. Referring specifically to Fig. 8, the pin 50 includes a cylindrical portion 68 and a conical portion 70 with a surface angled at about 45° relative to the surface of the cylindrical portion 68. The conical portion 70 includes a tip 72 that is angled at about 40° relative to the surface of the cylindrical portion 68. The pin 50 further includes a head portion 73 that limits inward movement of the pin 50 relative to the sleeve 58. The head portion 73 includes a curved outer surface that contacts the cam collar 56. As shown in Fig. 5, the spindle 44 further includes a drill point 45. The drill point 45 is a recess adapted to receive the end of the pin 50 if the pin 50 extends through the slot 62. This may occur, for example, when the pin 50 engages a saw blade 42 that is relatively thin.

As shown in Figs. 2 and 5, the spindle tip 60 extends axially beyond the end of the sleeve 58. This is believed to provide additional support to the saw blade 42, particularly forward of the tang 48, resulting in reduced blade breakage. In addition, the spindle tip 60 includes a chamfered or radiused tip 74 (Fig. 5). The chamfered or radiused tip 74 is also believed to reduce blade breakage.

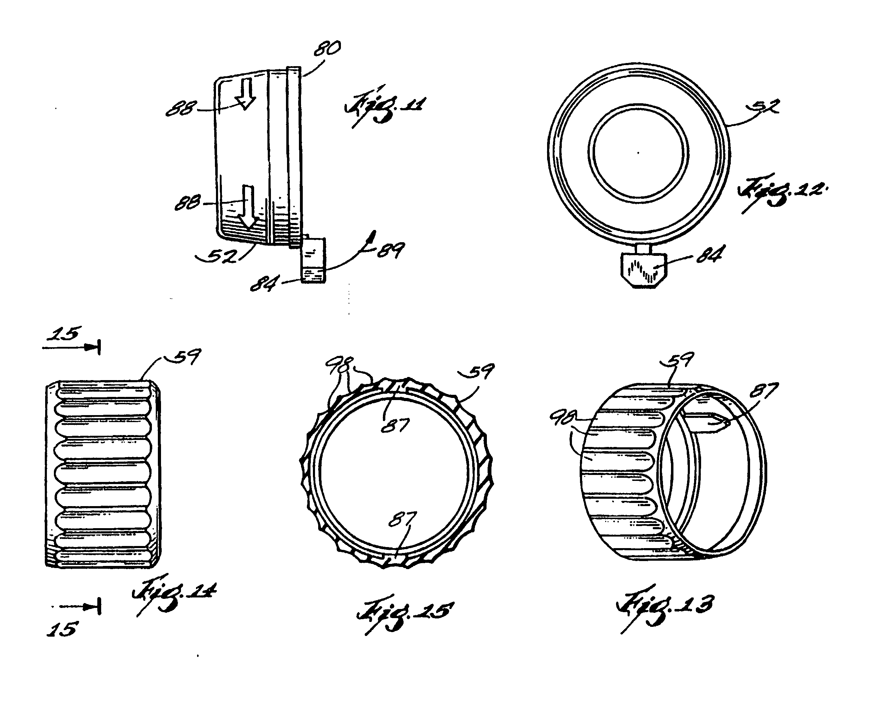

The cam collar 56 (Figs. 6, 7, 9, and 10) is rotatably positioned over the sleeve 58, and is thereby mounted on the end of the spindle. The cam collar 56 includes a radial camming surface 76 that cooperates with the pin 50 to selectively move the pin 50 toward the slot 62 to engage the saw blade 42, as described below in more detail. The cam collar 56 is rotatable relative to the spindle 44 between an engaged position (Fig. 6), where the pin 50 is forced toward the slot 62, and a disengaged position (Fig. 7), where the pin 50 is free to move out of the slot 62. In this way, the cam collar 56 constitutes an embodiment of an actuating member that is operatively associated with a locking member, here shown as the pin 50.

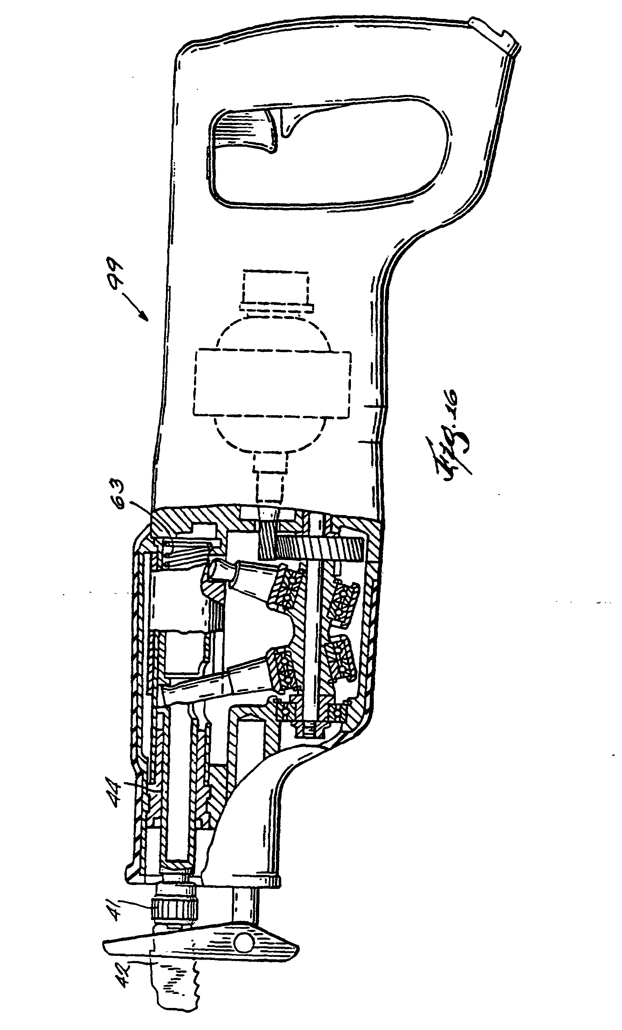

The cam collar 56 further includes a recessed outer edge 78 that cooperates with the front edge 80 of the spring cover 52 (Figs. 4 and 5). A recess 82 in the cam collar 56 (Fig. 10) cooperates with a tab member (e.g. tab 84) on the spring cover 52 (Figs. 11 and 12). The recess 82 facilitates insertion of the pin 50 during assembly, as described below in more detail. Two opposed longitudinal grooves 86 on the outer surface of the cam collar 56 facilitate engagement of the cam collar 56 with splines 87 on the inner surface of the collar housing 59 (Figs. 6, 13 and 15). The cam collar 56 further includes a cam collar pocket 57 that may collect contaminants during use.

The spring cover 52 (Figs. 1, 4, 5, 11, and 12) is rotatably positioned over the spindle tip 60. The spring cover encloses a substantial portion of the spring 54, and thereby prevents outside contaminants from entering the spring and affecting the action of the spring. Contaminants, such as bits of material thrown off by the saw, between the coils of the spring could prevent proper action of the spring. Additionally, as noted above, the front edge 80 of the spring cover 52 fits around the recessed outer edge 78 of the cam collar 56. The spring cover 52 thereby forms an labyrinth seal with the cam collar 56. Further, the collar housing 59 shields the junction of the spring cover 52 and the cam collar 56.

The tab 84 on the spring cover 52 fits within the recess 82 in the cam collar 56. More specifically, during assembly, the tab 84 is designed to be bent in the direction of the arrow 89 (Fig. 11) until the tab 84 is positioned within the recess 82 in the cam collar 56 (Fig. 10) as described below in more detail. The outer surface of the spring cover 52 includes a plurality of arrows 88 that provide a visual indication of the direction the clamp is designed to be turned.

The spring 54 (Figs. 1, 4 and 5) is positioned between the cam collar 56 and the spring cover 52. The spring 54 includes a rear leg 90 positioned within the slot 62, and a front leg 92 positioned within an orifice 94 in the cam collar 56. The spring 54 is thereby interconnected with the cam collar 56 for biasing the cam collar. The spring 54 constitutes an embodiment of a biasing member and is positioned to bias the cam collar 56 toward the engaged position.

In addition to providing a rotational bias function, the positioning of a portion of the spring 54, the rear leg 90, in the slot 62 also provides an ejection mechanism for automatically ejecting the saw blade 42 upon rotation of the cam collar 56 to the released position. More specifically, when the saw blade 42 is fully inserted into the slot 62, the tang 48 will contact the rear leg 90, and the rear leg 90 will be deflected (Fig. 4). The initial and deflected positions of the rear leg 90 are shown in Fig. 4 in dashed and solid lines, respectively. The deflection of the spring 54 provides an axial force that will urge the saw blade 42 from the slot 62 when the engagement of the clamp with the saw blade 42 is released. In this way, the rear leg 90 of the spring 54 constitutes an embodiment of an ejecting member. This feature is particularly advantageous when the main portion 46 has broken away from the tang 48.

The washer 55 (Figs. 1, 4 and 5) is positioned between the spring 54 and the cam collar 56. The washer 55 includes a notch 61 for accommodating the front leg 92 of the spring 54. The washer 55 provides a contaminant barrier to prevent debris from entering the cam collar 56 and disturbing the interaction between the camming surface 76 and the pin 50. In addition, the washer 55 prevents the tab 84 from entering the spring cover 52 and obstructing the operation of the spring 54.

The spring 54 is a spaced torsion spring (i.e., there is space between the coils) that can be compressed from its unloaded length. This compression of the spring 54 is used to bias the washer 55 into the engagement with the cam collar 56, thereby preventing the washer 55 from rattling around inside the assembly.

The collar housing 59 (Figs. 1, 4, 5 and 13 through 15) is positioned over both the cam collar 56 and engages the front edge 80 of the spring cover 52. The collar housing 59 further includes a clip portion 49 that snaps over the front edge 80 of the spring cover 52, to hold the spring cover 52 and the cam collar 56 in sealing engagement. Because the collar housing 59 is held forward by engagement with the front side of the cam collar 56, the collar housing thereby holds the spring cover 52 forward also. The collar housing 59 thereby performs the additional function of holding the spring cover 52 away from the spindle 44 to reduce frictional engagement of the spring cover 52 with the spindle. To aid in reducing frictional engagement of the spring cover 52 with the spindle 44, a gap 47 is left between the spring cover 52 and the spindle 44. The collar housing 59 includes a plurality of arcuate recesses 98 that facilitate engagement of the collar housing 59 by a user's hand or fingers. As noted above, the collar housing 59 also includes two opposing splines 87 that are dimensioned to engage corresponding grooves 86 in the cam collar 56, and thereby ensure that rotation of the collar housing 59 results in rotation of the cam collar 56.

The collar housing 59 performs the additional function of thermally insulating the user's hand or fingers from the heat of the blade 42, blade clamp mechanism 41, and spindle 44. Due in part to friction, various components of the reciprocating saw can heat up during use. If the collar housing 59 is made of plastic or other thermally insulative materials, then the user can be saved from an uncomfortable situation.

The saw blade 42 includes two shoulder portions 95 (Figs. 2 and 4) that form the transition from the tang 48 to the main portion 46. When the blade 42 is inserted into the slot 62, the shoulder portions 95 will engage the sleeve 58 at two locations. The blade 42 further includes a hole 96 into which the pin 50 will be inserted to facilitate engagement of the blade 42. In this regard, the positioning of the pin 50 relative to the end of the sleeve 58 is such that the blade 42 will be held in a three-point mount between the hole 96 and the two shoulder portions 95. More specifically, when the shoulder portions 95 contact the sleeve 58 and the pin 50 is radially advanced toward the hole 96 in the blade 42, the pin 50 will contact the rear edge of the hole 96 (i.e., the edge away from the shoulder portions 95). Due to the conical portions 70 of the pin 50, such contact of the pin 50 with the rear edge of the hole 96 will cause the blade 42 to be pulled rearwardly, resulting in the shoulder portions 95 being tightened against the sleeve 58. This results in a three-point mount between the rear edge of the hole 96 and the two shoulder portions 95.

In operation, before a saw blade is inserted, the cam collar 56 is normally in the engaged position due to the biasing action of the spring 54. To insert a saw blade 42, the collar housing 59 is engaged by the user and rotated to the released position, thereby allowing the pin 50 to move out of the slot 62. The tang 48 of the saw blade 42 is then inserted into the slot 62 until the shoulder portions 95 of the saw blade 42 contacts the sleeve 58. At this point, the hole 96 in the saw blade 42 is slightly misaligned with the pin 50. The cam collar 56 is then allowed to rotate back to the engaged position due to the biasing force of the spring 54. When moving from the released position to the engaged position, the radial camming surface 76 of the cam collar 56 forces the pin 50 toward the slot 62. Because of the misalignment of the pin 50 with the hole 96 in the saw blade 42, the pin 50 contacts the rear edge of the hole 96, thereby causing the saw blade 42 to be pulled slightly rearwardly and fixedly clamped by the mechanism.

The saw blade 42 is released by rotating the cam collar 56 against the biasing force of the spring 54. This allows the pin 50 to move out of the slot 62, thereby allowing the saw blade 42 to be pulled from the slot 62.

The above-described blade clamp 41 can be assembled in the following manner. Referring to Fig. 1, the spring cover 52 and spring 54 are installed on the spindle 44 with the rear leg 90 of the spring 54 positioned within the slot 62 of the spindle 44. The washer is then slid over the spindle 44 such that the notch 61 in the washer 55 receives the front leg 92 of the spring 54. Next, the cam collar 56 is positioned onto the spindle 44 such that the orifice 94 receives the front leg 92 of the spring 54. The sleeve 58 is then slid onto the spindle 44 and the spring 54 is compressed until the sleeve orifice 66 is aligned with the tip orifice 64. Next, the cam collar 56 is aligned relative to the spindle by rotating the cam collar 56 in the direction of the arrows 88 until the recess 82 is aligned with the sleeve orifice 66 and thereby aligned with the tip orifice 64. The pin 50 is then inserted through the recess 82, sleeve orifice 66, and the tip orifice 64. The cam collar 56 is then released. The tab 84 is then moved, such as by bending the tab 84 about 90°, into the recess 82. The tab 84 will help prevent the pin 50 from moving back into the recess 82. Finally, the collar housing 59 is slid over the cam collar 56 such that the splines 87 in the collar housing 59 engage the grooves 86 on the cam collar 56 until the collar housing 59 snaps onto the spring cover to hold the clamp mechanism 41 in place as a unit.

The foregoing description of the present invention has been presented for purposes of illustration and description. Furthermore, the description is not intended to limit the invention to the form disclosed herein. Consequently, variations and modifications commensurate with the above teachings . The embodiments described herein are further intended to explain best modes known for practicing the invention and to enable others skilled in the art to utilize the invention in such, or other, embodiments and with various modifications required by the particular applications or uses of the present invention. It is intended that the appended claims be construed to include alternative embodiments to the extent permitted by the prior art.

## Claims

1. A reciprocating saw comprising:
a reciprocatable spindle (44) having an end (60) adapted to receive a saw blade (42);
a blade clamp mechanism (41) connected to said spindle (44) and adapted to attach the saw blade (42) to said spindle (44), said blade clamp mechanism (41) including;
an actuating member (56) mounted on said end (60) of said spindle (44) and capable of rotating relative to said spindle (44) between an engaged position and a released position;
a locking member (50) operatively associated with said actuating member (56) and moveable relative to said spindle (44) such that when said actuating member (56) is in the engaged position said locking member (50) can engage the saw blade (42) and when said actuating member (56) is in the released position said locking member (50) will allow the saw blade (42) to be released from said clamp mechanism (41);
a biasing member (54) interconnected with said actuating member (56) for biasing said actuating member (56) toward the engaged position; **characterised in that**
a housing (59) is mounted to said actuating member (56) and rotatable with said actuating member (56).

2. The reciprocating saw of claim 1, wherein said housing (59) comprises a substantially thermally insulative material.

3. The reciprocating saw of claim 1 or claim 2, wherein said housing (59) is comprised of a plastic material.

4. The reciprocating saw of any preceding claim, wherein said housing (59) includes one or more splines (87) and said actuating member (56) includes one or more grooves (86), and wherein said one or more splines (87) engage said one or more grooves (86).

5. The reciprocating saw of any preceding claim, wherein said housing (59) further includes a plurality of arcuate recesses (98).

6. A reciprocating saw according to any preceding claim, further comprising an ejecting member (90) interconnected with said spindle (44) and capable of engaging the saw blade (42) such that the saw blade (42) is urged away from said end (60) of said spindle (44).

7. The reciprocating saw of claim 6, wherein said ejecting member (90) comprises a portion of said biasing member (54).

8. The reciprocating saw of claim 7, wherein said end (60) includes a recess (62), and wherein said portion (90) is positioned in said recess (62) and is capable of engaging the saw blade (44).

9. The reciprocating saw of claim 8, wherein said recess (62) is a slot and said ejecting member (90) projects into said slot (62).

10. The reciprocating saw of any preceding claim, further comprising a cover (52) enclosing a substantial portion of said biasing member (54), wherein said actuating member (56) engages said cover (52) to form a seal.

11. A reciprocating saw according to anyone of claims 1 to 9, further comprising a cover (52) enclosing a substantial portion of said biasing member (54) and a washer (55) positioned against a portion of said biasing member (54).

12. The reciprocating saw of claim 10 or claim 11, wherein said housing (59) engages said cover (52) to form a seal.

13. The reciprocating saw of anyone of claims 10 to 12, wherein said actuating member (56) engages said cover (52) at a junction and said housing (59) encloses at least part of said junction.

## Patentansprüche

1. Eine sich hin und her bewegende Säge, umfassend:
eine hin und her bewegbare Spindel (44) mit einem Ende (60), welches dafür ausgelegt ist, um ein Sägeblatt (42) aufzunehmen;
einem Blattklemmmechanismus (41), der mit der Spindel (44) verbunden und dafür ausgelegt ist, um das Sägeblatt (42) an der Spindel (44) anzubringen, wobei der Blattklemmmechanismus (41) einschließt:
ein Betätigungselement (56), das auf dem Ende (60) der Spindel (44) angebracht ist und in der Lage ist, sich relativ zu der Spindel (44) zwischen einer eingegriffenen Position und einer freigegebenen Position zu drehen;
ein Verriegelungselement (50), welches betriebsmäßig zu dem Betätigungselement (56) gehört und relativ zu der Spindel (44) bewegbar ist, so dass dann, wenn das Betätigungselement (56) in der eingegriffenen Position ist, das Verriegelungselement (50) in Eingriff mit dem Sägeblatt (42) stehen kann, und wenn das Betätigungselement (56) in der freigegebenen Position ist, das Verriegelungselement (50) dem Sägeblatt (42) erlauben wird, von dem Klemmmechanismus (41) freigegeben zu werden;
ein Vorspannelement (54), welches mit dem Betätigungselement (56) verbunden ist, zum Vorspannen des Betätigungselements (56) in Richtung auf die eingegriffene Position hin; **dadurch gekennzeichnet, dass**
ein Gehäuse (59) an dem Betätigungselement (56) angebracht und mit dem Betätigungselement (56) drehbar ist.

2. Die sich hin und her bewegende Säge nach Anspruch 1, wobei das Gehäuse (59) ein im wesentlichen thermisch isolierendes Material umfasst.

3. Die sich hin und her bewegende Säge nach Anspruch 1 oder Anspruch 2, wobei das Gehäuse (59) aus einem Plastikmaterial gebildet ist.

4. Die sich hin und her bewegende Säge nach irgendeinem vorangehendem Anspruch, wobei das Gehäuse (59) ein oder mehrere Stifte (87) einschließt und das Betätigungselement (56) ein oder mehrere Ausnehmungen (86) einschließt und wobei der eine oder die mehreren Stifte (87) in die eine oder die mehreren Ausnehmung (86) eingreifen.

5. Die sich hin und her bewegende Säge nach irgendeinem vorangehenden Anspruch, wobei das Gehäuse (59) ferner eine Vielzahl von bogenförmigen Aussparungen (98) einschließt.

6. Eine sich hin und her bewegende Säge nach irgendeinem vorangehenden Anspruch, ferner umfassend ein Auswurfelement (90), das mit der Spindel (44) verbunden ist und in der Lage ist, mit dem Sägeblatt (42) derart in Eingriff zu stehen, dass das Sägeblatt (42) weg von dem Ende (60) der Spindel (44) gedrängt wird.

7. Die sich hin und her bewegende Säge nach Anspruch 6, wobei das Auswurfelement (90) einen Abschnitt des Vorspannelements (54) umfasst.

8. Die sich hin und her bewegende Säge nach Anspruch 7, wobei das Ende (60) eine Aussparung (62) einschließt und wobei der Abschnitt (90) in der Aussparung (62) positioniert ist und in der Lage ist, mit dem Sägeblatt (44) in Eingriff zu stehen.

9. Die sich hin und her bewegende Säge nach Anspruch 8, wobei die Aussparung (62) ein Schlitz ist und das Auswurfelement (90) in den Schlitz (62) hinein vorsteht.

10. Die sich hin und her bewegende Säge nach irgendeinem vorangehenden Anspruch, ferner umfassend eine Abdeckung (52), die einen wesentlichen Abschnitt des Vorspannelements (54) einschließt, wobei das Betätigungselement (56) mit der Abdeckung (52) in Eingriff steht, um eine Abdichtung zu bilden.

11. Eine sich hin und bewegende Säge nach irgendeinem der Ansprüche 1 bis 9, ferner umfassend eine Abdeckung (52), die einen wesentlichen Abschnitt des Vorspannelements (54) einschließt, und eine Scheibe (55), die gegen einen Abschnitt des Vorspannelements (54) positioniert ist.

12. Die sich hin und her bewegende Säge nach Anspruch 10 oder Anspruch 11, wobei das Gehäuse (59) in die Abdeckung (52) eingreift, um eine Abdichtung zu bilden.

13. Die sich hin und her bewegende Säge nach irgendeinem der Ansprüche 10 bis 12, wobei das Betätigungselement (56) an der Abdeckung (52) an einem Übergang eingreift und das Gehäuse (59) wenigstens einen Teil des Übergangs umschließt.

## Revendications

1. Un scie sauteuse comprenant:
une broche déplaçable en va-et-vient (44) possédant une extrémité (60) adaptée pour recevoir un lame de scie (42);
un mécanisme de blocage de lame (41) relié à ladite broche (44) et adapté pour attacher la lame de scie (42) à ladite broche (44), ledit mécanisme de blocage de scie (41) incluant;
un élément d'actionnement (56) monté sur ladite extrémité (60) de ladite broche (44) et capable de tourner par rapport à ladite broche (44) entre une position engagée et une position dégagée;
un élément de verrouillage (50) associé fonctionnellement avec le dit élément d'actionnement (56) et déplaçable par rapport à ladite broche (44) de sorte que lorsque ledit élément d'actionnement (56) est en position engagée ledit élément de verrouillage (50) peut s'engager dans la lame de scie (42) et lorsque ledit élément d'actionnement (56) est en position dégagée ledit élément de verrouillage (50) permettra à la lame de scie (42) d'être dégagée dudit mécanisme de blocage (41);
un élément de rappel (54) interconnecté avec ledit élément d'actionnement (56) pour rappeler ledit élément d'actionnement (56) vers la position engagée (56); **caractérisé en ce que**
un boîtier (59) est monté sur ledit élément d'actionnement (56) et est capable de tourner avec ledit élément d'actionnement (56).

2. La scie sauteuse de la revendication 1, dans laquelle ledit boîtier (59) est essentiellement constitué d'un matériau isolant thermique.

3. La scie sauteuse de la revendication 1 ou la revendication 2, dans laquelle ledit boîtier (59) est constitué d'un matériau plastique.

4. La scie sauteuse d'une quelconque revendication précédente, dans laquelle ledit boîtier (59) inclut une ou plusieurs cannelures (87) et ledit élément d'actionnement (56) inclut une ou plusieurs rainures (86), et dans laquelle ladite une ou plusieurs cannelures (87) s'engagent dans ladite une ou plusieurs rainures (86).

5. La scie sauteuse d'une quelconque revendication précédente, dans laquelle ledit boîtier (59) inclut en outre une pluralité de cavités arquées (98).

6. La scie sauteuse d'une quelconque revendication précédente, comprenant en outre un élément d'éjection (90) interconnecté avec ladite broche (44) et capable de s'engager dans la lame de scie (42) de sorte que la lame de scie (42) est expulsée de ladite extrémité (60) de ladite broche (44).

7. La scie sauteuse de la revendication 6, dans laquelle ledit élément d'éjection (90) est constitué d'une portion dudit élément de rappel (54).

8. La scie sauteuse de la revendication 7, dans laquelle ladite extrémité (60) inclut une cavité (62), et dans laquelle ladite portion (90) est positionnée dans ladite cavité (62) et est capable de s'engager dans la lame de scie (44).

9. La scie sauteuse de la revendication 8, dans laquelle ladite cavité (62) est une encoche et ledit élément d'éjection (90) s'avance dans ladite encoche (62).

10. La scie sauteuse d'une quelconque revendication précédente, comprenant en outre un couvercle (52) enfermant une portion substantielle dudit élément de rappel (54), dans lequel ledit élément d'actionnement (56) s'engage dans ledit couvercle (52) pour former un joint.

11. La scie sauteuse selon une quelconque des revendications 1 à 9, comprenant en outre un couvercle (52) enfermant une portion substantielle dudit élément de rappel (54) et une rondelle (55) positionnée contre une portion dudit élément de rappel (54).

12. La scie sauteuse de la revendication 10 ou la revendication 11, dans laquelle ledit boîtier (59) s'engage dans ledit couvercle (52) pour former un joint.

13. La scie sauteuse selon une quelconque des revendications 10 à 12, dans laquelle ledit élément d'actionnement (56) s'engage dans ledit couvercle (52) en une jonction et ledit boîtier (59) enferme au moins une partie de ladite jonction.
